# DEMANDE DE BREVET EUROPEEN

(11) **EP 0 842 952 A1**
(43) Date de publication de la demande: **20.05.1998**
(21) Numéro de dépôt: 97402618.9
(22) Date de dépôt: 03.11.1997
(51) Int. Cl.: C08F 2/32

(54) **Procédé pour l'obtention de polymères hydrophiles à grande vitesse de dissolution ou de gonflement dans l'eau**

(30) Priorité: 14.11.1996 FR 9613890
(71) Demandeur: ELF ATOCHEM S.A., 92800 Puteaux, Hauts-de-Seine (FR)
(72) Inventeur: Colette, Christian, 75005 Paris (FR); Kowalik, André, 60270 Gouvieux (FR); Hidalgo, Manuel, 92270 Bois Colombes (FR); Mallo, Paul, 78400 Chatou (FR); Corpart, Jean-Marc, 95110 Sannois (FR)

(57) **Abrégé**

C'est un procédé de polymérisation de monomères hydrophiles en suspension inverse en présence d'un tensioactif d'HLB comprise entre 8 et 12, comprenant une première étape de polymérisation avec inversion de phase, puis une seconde étape au cours de laquelle une deuxièùme charge de monomère est introduite dans le réacteur à la température de polymérisation du monomère.

## Description

La présente invention concerne un procédé d'obtention de polymères et de copolymères hydrophiles en poudre dont la caractéristique principale est, s'ils ne sont pas réticulés, leur grande vitesse de dissolution dans l'eau, et l'industrie les utilise alors entre autres comme floculants pour les traitements des eaux, comme agents de déshydratation des boues, comme épaississants, ou encore comme agents de rétention dans l'industrie papetière, et s'ils sont partiellement réticulés, leur forte absorption de l'eau et des fluides aqueux, ce qui les destine à constituer des superabsorbants, tant pour la production d'articles d'hygiène que pour la câblerie.

Les polymères et copolymères hydrophiles auxquels s'adresse la présente invention sont les produits linéaires ou ramifiés, partiellement réticulés ou non, de masse moléculaire de plusieurs millions de daltons, que l'on obtient grâce à des procédés de polymérisation en milieu dispersé dans la première étape desquels la phase continue est une phase organique, et la phase dispersée une solution aqueuse des monomères constitutifs.

Ces techniques de polymérisation dites en suspension inverse sont connues depuis longtemps et sont décrites dans de très nombreux brevets. Voir par exemple les brevets US 3,957,739 et US 4,093,776 pour un procédé de polymérisation en une étape, ou la publication européenne EP-441507 (SUMITOMO SEIKA CHEM. CO) pour un procédé avec deux étapes ou plus d'introduction successive du monomère à polymériser.

Un point commun important à toutes ces techniques est l'utilisation d'au moins un tensioactif dont la balance hydrolipophile (HLB) est comprise entre 3 et 6, et dont le rôle est de stabiliser la suspension inverse.

A l'issue de ces procédés de polymérisation en suspension inverse, le polymère se retrouve finalement sous la forme d'une poudre de morphologie sphérique et de distribution granulométrique comprise entre 50 et 400 µm, dont la dissolution ou le gonflement dans l'eau sont lents, ce qui en réduit considérablement l'intérêt, notamment dans des applications comme l'épaississement de solutions aqueuses ou le traitement des eaux.

Dans d'autres procédés de polymérisation en suspension inverse, on a mis en oeuvre des tensioactifs d'HLB comprise entre 8 et 12, par exemple ceux qu'on trouve divulgués dans le brevet européen EP 36463 (SEITETSU KAGAKU CO) ou le brevet FR 2,251,573 (NOBEL HOECHST CHIMIE). La suspension inverse y est réalisée à basse température de la même manière que dans les techniques précédentes, c'est-à-dire qu'on commence par former une dispersion de la solution aqueuse de monomères sous forme de gouttelettes dans le milieu continu organique et qu'on élève la température pour démarrer la polymérisation. Mais ici, on observe une inversion des phases au cours de la polymérisation : il y a formation d'un gel continu, que l'effet mécanique de l'agitation convertit en granulés dont la taille est comprise entre 10 µm et 600 µm. Ce mécanisme d'inversion de phases a été expliqué dans "Inverse Suspension Polymerization of Acrylamide" dans European Polymer Journal, vol. 18, pages 639 à 645, 1982. Les grains de poudre que l'on obtient ainsi ont une morphologie très particulière, très tourmentée, qui rappelle celle de "framboises" ou de "choux-fleurs, et non plus celle de billes sphériques. Leur macroporosité est importante et par conséquent leur surface spécifique est en moyenne 3 à 10 fois supérieure à celle d'une poudre de grains sphériques de distribution granulométrique équivalente. Cette grande surface spécifique joue un rôle très important dans la vitesse de dissolution (ou de gonflement) de la poudre dans l'eau et les fluides aqueux. La cinétique de dissolution de tels grains est rapide et, de ce fait, ces poudres présentent un grand intérêt dans les applications précitées. Cependant, le gros inconvénient de ces procédés en suspension inverse avec inversion des phases est leur productivité limitée du fait de l'encombrement du réacteur par la phase organique. Il se trouve en effet que l'utilisation de tensioactifs de HLB comprise entre 8 et 12 ne permet pas de travailler à un rapport volumétrique phase aqueuse sur phase organique (on dira par la suite un "RASO") élevé. D'après l'art antérieur, ce rapport est très critique, et la pratique industrielle le confirme : il faut impérativement se situer à un rapport (RASO) inférieur à 0,6, et préférentiellement inférieur à 0,5, pour que la suspension inverse initiale avant polymérisation soit stabilisée. A des "RASO" supérieurs à 0,6, le tensioactif d'HLB comprise entre 8 et 12 n'est plus capable d'assurer un équilibre entre la coalescence et la rupture des gouttelettes en suspension et le système se fige en masse en cours de polymérisation.

Pour l'obtention de polymères hydrophiles en poudre, linéaires, ramifiés, le cas échéant réticulés, à grande vitesse de dissolution ou de gonflement dans l'eau ou les fluides aqueux, on a maintenant mis au point un procédé consistant à disposer d'une solution d'un tensioactif d'HLB comprise entre 8 et 12 dans une solution hydrocarbonée, à y introduire sous agitation une solution aqueuse d'un monomère insaturé hydrophile ou d'un mélange de monomères insaturés hydrophiles et à développer le processus de polymérisation avec inversion de phase sous l'effet conjugué d'un amorceur de polymérisation radicalaire et de la température, puis lorsque cette charge de monomère s'est polymérisée, à introduire dans le milieu une deuxième charge de monomère insaturé hydrophile, ou d'un mélange de monomères insaturés hydrophiles, en solution aqueuse, et lorsque cette deuxième charge de monomère s'est polymérisée, à en extraire la phase hydrocarbonée et l'eau par distillation et séchage. Les caractéristiques du procédé sont que l'on procède à l'introduction de la deuxième charge de monomère à la température de polymérisation, et que le volume de ladite solution aqueuse de monomère est tel que le rapport volumétrique de phase aqueuse sur phase hydrocarbonée soit compris entre 0,6 et 1,2.

On peut ainsi réaliser des venues avec des "RASO" très supérieurs aux meilleurs "RASO" des procédés classiques (≤0,6), en pratique de 0,6 à 1,2. La productivité est considérablement améliorée sans que la qualité des poudres hydrophiles soit altérée. Il est très surprenant de constater que la morphologie "framboise" de la poudre finale obtenue n'est pas du tout affectée, que sa surface spécifique n'est pas diminuée, et que sa distribution granulométrique reste située entre 100 et 800 µm.

Une variante intéressante consiste à procéder à la première alimentation du réacteur en solution aqueuse de monomère directement à la température de polymérisation. Cette variante a pour avantage d'uniformiser et de simplifier la commande de la température de consigne du réacteur.

Pour réaliser l'invention :
- On dissout dans une phase organique un tensioactif d'HLB comprise entre 8 et 12 ; après dissolution, on refroidit le mélange à une température de 10 à 30°C.
- On ajoute alors de façon continue, en maintenant la masse réactive sous agitation, une solution aqueuse de monomères hydrophiles préparée à part à froid et contenant le cas échéant, c'est-à-dire en vue de l'obtention de polymères réticulés, un agent de réticulation, et en parallèle une solution d'un amorceur de polymérisation.
- On porte la température du réacteur à la température de polymérisation (au sens de la présente invention, on entend par température de polymérisation, une température à laquelle s'opére convenablement la polymérisation des monomères et qui dépend, entre autres, de la nature et de la quantité de l'amorceur de polymérisation utilisé ; une température de polymérisation convenable est 75°C ± 10°C).

Ou bien
- On dissout dans une phase organique à chaud un tensioactif d'HLB comprise entre 8 et 12, et on porte la solution ainsi obtenue à une température de consigne choisie comme température de polymérisation.
- On ajoute de façon continue, en maintenant la masse réactive sous agitation à la température de consigne, une solution aqueuse de monomères hydrophiles préparée à part et contenant le cas échéant un agent de réticulation, et en parallèle une solution d'un amorceur de polymérisation.
- A ce stade, on assiste, dans l'un ou l'autre cas, au démarrage de la polymérisation, marquée par une exothermie et par une modification de l'aspect du contenu du réacteur (déphasage, effet de Weissenberg se manifestant dans la phase aqueuse - la phase aqueuse partiellement gélifiée s'enroule autour de l'axe de l'agitateur, retour au latex laiteux) qui est l'une des manifestations de l'inversion de phase, une autre étant l'augmentation sensible du couple sur l'agitateur. Lorsque ce couple est devenu constant, ce qui traduit que la polymérisation avec inversion de phase est suffisamment avancée, on poursuit l'agitation à la température de consigne pendant environ trente minutes de façon à parfaire la polymérisation.
- On ajoute alors dans le milieu toujours maintenu à la température de consigne une deuxième charge de monomères, dont le volume est calculé de façon à ce qu'en fin d'addition on atteigne un RASO final de 0,6 à 1,2, plus particulièrement de 0,7 à 1,1. Lorsque la température inerne du réacteur revient au niveau de la température de consigne, on poursuit l'agitation à la température de consigne pendant environ trente minutes de façon à parfaire la polymérisation.
- L'excès de phase organique est enfin éliminé par filtration, et le produit séparé est soumis à une distillation azéotropique avant d'être séché dans un sécheur à pales.

La phase organique est le plus souvent constituée par un liquide hydrocarboné non réactif, qui joue uniquement le rôle de milieu dispersif. Les liquides hydrocarbonés utilisables pour la présente invention sont des produits chimiquement inertes vis à vis des monomères et des polymères formés. Il est nécessaire qu'ils forment un azéotrope avec l'eau pour que celle-ci puisse être éliminée par distillation azéotropique ; lorsque cette condition n'est pas respectée, au lieu d'obtenir en final une poudre fluide, on obtient des agglomérats. Il faut également que leur point d'ébullition soit suffisamment peu élevé pour qu'ils puissent être évaporés de la poudre finale sans que celle-ci subisse de dégradation thermique; en pratique leur point d'ébullition devra tout au plus égal à 100°C. Répondent à ces caractéristiques, par exemple le n-heptane, le cyclohexane, l'iso-octane, le toluène.

La fonction du tensioactif à HLB comprise entre 8 et 12 est d'assurer la stabilité de la dispersion tout en permettant la réalisation du phénomène d'inversion des phases décrit précédemment. Sont utilisables pour l'invention, les agents non ioniques ayant une HLB comprise entre 8 et 12 comme par exemple les alkylphénols éthoxylés, les alcools et éthers éthoxylés, les amines et acides gras éthoxylés, les dérivés de sorbitan ou les dérivés de sorbitol éthoxylés. Le monolaurate de sorbitan est particulièrement adapté pour l'invention.

Les monomères insaturés utilisables dans cette invention sont les monomères hydrophiles insaturés comme l'acide acrylique, l'acide méthacrylique, l'acrylamide et le méthacrylamide, ainsi que leurs dérivés N-substitués comme le N-méthylolacrylamide ou le N-méthylolméthacrylamide, les esters cationiques de l'acide (méth)acrylique ou de l'acide méthacrylique tels que le diméthyl- ou le diéthyl-amino(éthyl ou propyl)(méth)acrylate, les sels de ces esters cationiques de l'acide acrylique, les dérivés ammoniums quaternaires de ces esters cationiques, par exemple le chlorure d'acryloxyéthyltriméthylammonium (ADANQUAT®MC), l'acide 2-acrylamido-2-méthylpropanesulfonique. On peut utiliser de tels monomères insaturés seuls ou en mélange.

La préparation des solutions de ces monomères est effectuée par dissolution et, le cas échéant (celui de monomères acides), par neutralisation partielle ou totale des monomères, opérée à froid pour éviter à ce stade tout risque de polymérisation intempestive.

Les amorceurs sont des amorceurs de polymérisation radicalaire. Les amorceurs radicalaires hydrosolubles sont particulièrement indiqués au cas présent. Ils peuvent être choisis dans la catégorie des peroxydes, des hydroperoxydes, des peracides, des composés azoïques et des persels minéraux. Les persulfates de sodium, de potassium ou d'ammonium sont particulièrement appréciés. Dans le cas où cet amorceur est un persulfate de sodium, de potassium ou d'ammonium, qui sont des amorceurs préférés pour l'invention, la température de polymérisation n'est pas inférieure à 50°C.

Les agents de réticulation utilisables dans cette invention sont généralement constitués par des composés possédant au moins deux groupes insaturés copolymérisables avec le monomère insaturé, dont le type est celui des di/triacrylates de polyols, ou des composés susceptibles de réagir avec ses produits de polymérisation, comme les diglycidyléthers de diols. La polymérisation est essentiellement amorcée par des amorceurs de polymérisation radicalaire, qu'on préfère hydrosolubles puisque aussi bien le monomère que le polymère sont eux-mêmes hydrophiles ; les persulfates de sodium ou potassium ou ammonium sont particulièrement adaptés au cas présent, compte tenu de leurs cinétiques de décomposition à la température de polymérisation. Lorsqu'on les utilise, on procède généralement à leur addition à la masse réactive en même temps que la solution des monomères.

Les exemples qui suivent feront mieux comprendre l'invention :

### EXEMPLE 1 : préparation d'un floculant cationique copolymère d'AMQUAD et d'acrylamide selon l'invention.

### Séquence a

Dans un réacteur d'un litre muni d'un dispositif d'introduction de réactifs solides ou liquides, d'un agitateur, d'un système de balayage par gaz neutre, d'une sonde de température et d'un dispositif de chauffage/réfrigération, on dissout à température ambiante et sous agitation de 600 tours/minute, 0,74 g de monolaurate de sorbitan (HLB = 8,6) dans 322,8 g d'heptane. Le mélange est alors amené à 70°C et on procède à un balayage d'azote à raison de 200 ml/min.

### Séquence b

A part, on prépare dans un bécher sous agitation la solution de monomères suivante :
- 58,2 g d'une solution de chlorure d'acryloxyéthyltriméthylammonium à 75% de matière active (ADAMQUAT MC75 ® Elf Atochem S.A.)
- 37,4 g d'acrylamide
- 77,9 g d'eau bipermutée

Le total de la phase aqueuse est donc de 173,5 g.

### Séquence c

Le réacteur étant maintenu à 600 tours/minute et la température à 70°C, on procède alors, toujours sous balayage d'azote, à l'introduction de la phase aqueuse préparée en séquence b. Cette introduction se déroule en environ 20 minutes.

### Séquence d

La phase aqueuse ayant été introduite, on ajoute alors dans le réacteur 2g d'une solution à 2 % (en masse) de persulfate de potassium.

La polymérisation démarre alors rapidement, la température s'élève au-dessus de 70°C. A la fin de la réaction la température revient à la température de consigne du réacteur soit 70°C.

### Séquence e

Pendant le déroulement de l'étape précédente, on prépare à part une solution aqueuse équivalente à celle préparée en séquence b.

### Séquence f

L'agitation dans le réacteur de polymérisation est maintenue à 600 tours/minute, et le balayage d'azote à 200 ml/minute. On y introduit peu à peu la charge aqueuse préparée en séquence e, la température de consigne du réacteur est maintenue à 70°C pendant cette introduction. Après une courte période d'inhibition la polymérisation redémarre. On la laisse se poursuivre pendant une 30 minutes.

### Séquence g

On élimine la totalité de l'heptane et la majeure partie de l'eau par distillation, pour obtenir une poudre dont l'humidité résiduelle est de 8 %.

Le produit polymère hydrophile floculant ainsi obtenu est caractérisé par un taux de fines passant à 100 µm de 1 %, et par les propriétés viscosimétriques de sa solution à 1 % dans l'eau bipermutée (mesurées sur viscosimètre Brookfield, système RTV, axe/mobile 4, à 20 tours/min) :
η = 5500 mPas
η = 2840 mPas avec rajout de 0,28g/1 NaCl,
[η] = 5,3 dl/g T = 25°C, NaCl 1M

### EXEMPLE 2 : Préparation d'un polymère hydrophile épaississant et superabsorbant polyacrylique selon l'invention.

### Séquence a

Dans un réacteur d'un litre muni d'un dispositif d'introduction de réactifs solides ou liquides, d'un agitateur, d'un système de balayage par gaz neutre, d'une sonde de température et d'un dispositif de chauffage/régulation, on dissout à température ambiante et sous agitation de 600 tr/min, 0,81 g de monolaurate de sorbitan dans 523,5 g d'heptane.

Le mélange est alors amené à 70°C et on procède à un balayage d'azote à raison de 200 ml/min.

### Séquence b

A part, on neutralise dans un bécher, 95,26 g une solution aqueuse à 80 % en poids d'acide acrylique par 141 g d'une lessive de soude à 22,5 % en poids. Cette opération est réalisée de telle manière que la température de la solution ne dépasse pas 25°C.

On ajoute alors 0,114 g de persulfate de potassium dissous dans 5,6 g d'eau permutée.

### Séquence c

Le réacteur étant maintenu à 70°C, sous agitation 600 tours/minute et sous balayage d'azote à raison de 200 ml/minute, on y introduit la phase aqueuse précédemment préparée. Après une courte période d'inhibition la polymérisation démarre, la température s'élève au-dessus de 70°C. A la fin de la réaction la température revient à la température de consigne du réacteur, soit 70°C.

### Séquence d

Pendant le déroulement de l'opération précédente, on procède à part à la préparation d'une deuxième phase aqueuse en neutralisant 95,26 g d'acide acrylique à 80°% par 141 g d'une lessive de soude à 22,5 % en poids. Cette opération est réalisée de telle manière que la température de la solution ne dépasse pas 25°C. On ajoute alors 3,6 g d'une solution aqueuse à 2% en poids d'éthylène glycol diglycidyléther.

### Séquence e

La phase aqueuse préparée en d est alors introduite dans le réacteur de polymérisation tel qu'il se trouve en fin de séquence c. L'introduction se fait en environ 20 minutes. Le balayage d'azote reste de 200 ml/minutes et l'agitation de 600 tours/minute. La température de consigne de température est toujours fixée à 70°C. Après une courte période d'inhibition la polymérisation démarre. On la laisse se poursuivre pendant 30 minutes.

### Séquence f

On élève alors à nouveau la température interne du réacteur, en portant la double enveloppe à 120°C de manière à éliminer l'eau et l'heptane. Après évaporation complète on obtient un polymère hydrophile dont les caractéristiques sont décrites ci-après.

Granulométrie : taux de fines passant à 100 µm d'environ 1 %.

On remarque les propriétés viscosimétriques du produit:
η (1 % dans H₂O) > 60 000 mPas
η (1 % dans H₂O + 0,1 % NaCl) = 20.000 mPas

### EXEMPLE 3 : Préparation d'un floculant anionique copolymère d'acide acrylique et d'acrylamide.

### Séquence a

Dans un réacteur d'un litre muni d'un dispositif d'introduction de réactifs solides ou liquides, d'un agitateur, d'un système de balayage par gaz neutre, d'une sonde de température et d'un dispositif de chauffage/réfrigération, on dissout à température ambiante sous agitation de 600 tours/minute, 0,74 g de monolaurate de sorbitan dans 322,8 g d'heptane. Le mélange est alors amené à 70°C, puis on procède à un balayage d'azote à raison de 200 ml/min.

### Séquence b

A part, on introduit dans un bécher sous agitation :
- 37,9 g d'acide acrylique
- 65,5 g d'une lessive de soude à 22,5 %
- 54,4 g d'eau
- 15,7 g d'acrylamide.

Le total de la phase aqueuse est donc de 173,5 g.

### Séquence c

Le réacteur étant maintenu sous agitation à 600 tours/minute et la température à 70°C, on procède alors, toujours sous balayage d'azote à l'introduction de la phase aqueuse préparée en séquence b. Cette introduction se déroule en environ 20 minutes.

### Séquence d

La phase aqueuse ayant été introduite, on ajoute alors dans le réacteur de polymérisation 2 g d'une solution à 2 % (en masse) de persulfate de potassium.

La polymérisation démarre alors rapidement, la température s'élève au-dessus de 70°C. A la fin de réaction, la température revient à la température de consigne du réacteur soit 70°C.

### Séquence e

Pendant le déroulement de l'étape précédente, on prépare à part une solution aqueuse équivalente à celle préparée en séquence b.

### Séquence f

L'agitation dans le réacteur est maintenue à 600 tr/min, et le balayage d'azote à 200 ml/min. On y introduit peu à peu la charge aqueuse préparée en séquence e, la température de consigne du réacteur est maintenue à 70°C pendant cette introduction. Après une courte période d'inhibition la polymérisation démarre. On la laisse se poursuivre pendant 30 minutes.

### Séquence g

On élimine la totalité de l'heptane et la majeure partie de l'eau par distillation, pour obtenir une poudre dont l'humidité résiduelle est de 8 %.

On obtient ainsi un polymère hydrophile floculant dont le taux de fines à 100 µm est de 1%, et dont les caractéristiques viscosimétriques sont
η (1% dans H₂O) = 8400 mPas
η (1% dans H₂O + 0,28 g/l de NaCl) = 5000 mPas
[η] (T = 25°C, NaCl 1M) = 2,2 dl/g

### Exemple 4

Comparaison de polymères hydrophiles polyacryliques acryliques de type framboises, réalisés par polymérisation en suspension inverse en présence de monolaurate de sorbitan (HLB = 8,6) selon l'art antérieur et selon l'invention.

Le polymère P1 a été réalisé avec une seule introduction de monomère, dans les conditions de l'exemple 2, aux différences importantes suivantes :
à la séquence a, la solution de monolaurate de sorbitan est gardée à 36°C;
à la séquence c, on effectue toute l'introduction du monomère avant de porter le réacteur à 70°C;
il n'y a pas de séquences d et e.

Ce sont des conditions qui rappellent celles de l'art antérieur constitué par l'exemple 1 du brevet EP-A-36463.

Le polymère P2 a été réalisé avec deux introductions de monomère, dans les conditions de l'exemple 2, aux différences importantes suivantes :
à la séquence a, la solution de monolaurate de sorbitan est gardée à 36°C;
à la séquence c, on effectue toute l'introduction du monomère avant de porter le réacteur à 70°C; en fin de séquence, on ramène la température du réacteur à 10°C,
à la séquence e, la deuxième introduction de monomère se fait à la température basse de la fin de l'étape précédente. La température de consigne n'est affichée qu'après que le monomère ait été en totalité introduit dans le réacteur.

Cet exemple reproduit les circonstances de l'art antérieur représenté par l'exemple 1 du brevet EP 4411507.

Le polymère P3 est le poymère selon l'invention de l'exemple 2.

Le polymère P4 est un polymère selon l'invention obtenu en suivant le processus de l'exemple 2, à la différence près qu'au cours de l'étape e, l'introduction de la seconde charge de monomère est effectuée en 60 minutes au lieu de 20 minutes.

Les résultats obtenus sont consignés dans le tableau ci-dessous, dans lequel :
- l'adsoption est la capacité d'absorption intrinsèque de la résine superabsorbante qui se mesure par le test dit du "tea-bag" (mesure des capacités d'absorption et de rétention par la méthode du "tea-bag", EDANA, Association Européenne des Non-Tissés, mesure des capacités d'absorption et de rétention par la méthode du "tea-bag"). Selon ce test, on mesure la reprise d'eau en poids par rapport au poids d'une résine sèche enfermée dans un sachet de papier thermoscellable, après immersion d'une vingtaine de minutes dans une solution aqueuse à 0,9 % de chlorure de sodium et égouttage d'une dizaine de minutes ; le même sachet est ensuite centrifugé pendant trois minutes à une vitesse spécifiée et pesé à nouveau, ce qui donne accès à la capacité de rétention d'eau saline.
- Les valeurs de TPG sont les valeurs de temps de prise. Le TPG en gel se mesure comme suit. Dans un bêcher de 250 ml et 60 mm de diamètre externe, on verse 3 g de poudre superabsorbante. On place à l'intérieur du bêcher un agitateur magnétique de dimensions 45X8 mm et le tout est placé sur une plaque d'agitation magnétique. L'agitation est réglée à 600 tours par minute juste avant de verser à l'intérieur du bêcher 100 ml d'une solution d'eau salée à 0,9% et de déclencher simultanément un chronomètre. Celui-ci est arrêté au moment où le vortex d'agitation disparaît. Le temps en secondes, indiqué par le chronomètre correspond au temps de prise en gel du produit.
- Les valeurs de SC 5KPa représentent la capacité de succion capillaire sous pression (SC), qui est la mesure de la capacité d'un lit de 1,5 g de produit superabsorbant d'absorber une eau salée à 0,9 g par litre sous une charge, ici choisie de 5 kPa. Il s'agit d'une propriété bien connue, désignée sous les termes d'absorption ou de succion capillaire sous pression ou sous charge (on rencontre fréquemment le terme anglo-saxon "absorption under load", abrégé par AUL). Le mode opératoire en est universellement pratiqué. On en trouvera une description, par exemple dans la demande de brevet EP-A1-0258120.

| Polymère hydrophile | P1 (art antérieur) | P2 à froid (art antérieur) | P3 à chaud (selon l'invention) | P4 à chaud (selon l'invention) |
|---|---|---|---|---|
| caractéristiques d'introduction des charges | 1 charge à 36°C | 2 charges charge 1:36°C charge 2:10°C | 2 charges à 70°C charge 1:20min charge 2:20min | 2 charges à 70°C charge 1:20min charge 2:60min |
| | | | | |
| Granulométrie % à | | | | |
| >630µm | 3,27 | 14,71 | 19,19 | 16,28 |
| >500µm | 4,76 | 11,96 | 13,08 | 18,26 |
| >315µm | 10,12 | 22,75 | 23,26 | 32,89 |
| >224µm | 9,82 | 11,47 | 18,02 | 20,56 |
| >100µm | 46,13 | 28,82 | 25,29 | 11,51 |
| <100µm | 25,89 | 5,29 | 1,16 | 0,49 |
| | | | | |
| diamètre moyen µm | 206 | 346 | 396 | 428 |
| | | | | |
| TPG (s) | 5 | 31 | 23 | 33 |
| | | | | |
| Absorption (g/g) | 59 | 37 | 48 | 47 |
| | | | | |
| SC 5 Kpa (g/g) | 20,4 | 26,2 | 26 | 26,7 |

On constate que le procédé selon l'invention délivre ici des superabsorbants tout à fait comparables en qualité aux produits de l'art antérieur, sinon globalement meilleurs, avec les avantages de productivité d'un excellent rapport produit fini sur solvant hydrocarboné utilisé, et une très grande aisance dans la conduite thermique des opérations.

## Revendications

1. Procédé pour l'obtention de polymères hydrophiles en poudre, linéaires, ramifiés, le cas échéant réticulés, à grande vitesse de dissolution ou de gonflement dans l'eau ou les fluides aqueux,
consistant à disposer d'une solution d'un tensioactif d'HLB comprise entre 8 et 12 dans une solution hydrocarbonée, à y introduire sous agitation une solution aqueuse d'un monomère insaturé hydrophile ou d'un mélange de monomères insaturés hydrophiles et à développer le processus de polymérisation avec inversion de phase sous l'effet conjugué d'un amorceur de polymérisation radicalaire et de la température, puis lorsque cette charge de monomère s'est polymérisée, à introduire dans le milieu une deuxième charge de monomère insaturé hydrophile, ou d'un mélange de monomères insaturés hydrophiles, en solution aqueuse, et lorsque cette deuxième charge de monomère s'est polymérisée, à en extraire la phase hydrocarbonée et l'eau par distillation et séchage,
caractérisé en ce
que l'on procède à l'introduction de la deuxième charge de monomère à la température de polymérisation, et que le volume de ladite solution aqueuse de monomère est tel que le rapport volumétrique de phase aqueuse sur phase hydrocarbonée soit compris entre 0,6 et 1,2.

2. Procédé selon la revendication 1, caractérisé en ce que l'introduction de la première charge de monomère hydrophile est opérée à la température de polymérisation.

3. Procédé selon l'une ou l'autre des revendications 1 ou 2, caractérisé en ce que le tensioactif d'HLB comprise entre 8 et 12 est le monolaurate de sorbitan.

4. Procédé selon l'une ou l'autre des revendications 1 ou 2, caractérisé en ce que les monomères insaturés hydrophiles sont pris dans le groupe constitué par l'acide acrylique, l'acide méthacrylique, l'acrylamide et le méthacrylamide, ainsi que leurs dérivés N-substitués comme le N-méthylolacrylamide ou le N-méthylolméthacrylamide, les esters cationiques de l'acide (méth)acrylique ou de l'acide méthacrylique tels que le diméthyl- ou le diéthyl-amino(éthyl ou propyl) (méth)acrylate, les sels de ces esters cationiques de l'acide acrylique, les dérivés ammoniums quaternaires de ces esters cationiques, dont le chlorure d'acryloxyéthyltriméthylammonium et l'acide 2-acrylamido- 2-méthylpropanesulfonique.

5. Procédé selon les revendications 1 à 3, caractérisé en ce que la température de poymérisation est de 75°C ± 10°C.
